# EUROPÄISCHE PATENTSCHRIFT

(11) **EP 1 368 936 B1**
(45) Veröffentlichungstag und Bekanntmachung des Hinweises auf die Patenterteilung: **09.02.2005**
(21) Anmeldenummer: 01990556.1
(22) Anmeldetag: 13.12.2001
(51) Int. Cl.: H04L 12/42

(54) **FAHRZEUG-AUDIOSYSTEM**
VEHICLE AUDIO SYSTEM
SYSTEME AUDIO POUR VEHICULE

(30) Priorität: 25.01.2001 DE 10103464
(43) Veröffentlichungstag der Anmeldung: 10.12.2003
(73) Patentinhaber: DaimlerChrysler AG, 70567 Stuttgart (DE)
(72) Erfinder: ALBUS, Rainer, 72358 Dormettingen (DE); BAUER, Adel, 71634 Ludwigsburg (DE); NIEMCZYK, Norbert, 75180 Pforzheim (DE)
(86) Internationale Anmeldenummer: PCT/EP2001/014679
(87) Internationale Veröffentlichungsnummer: WO 2002/060122

(56) Entgegenhaltungen:
- EP-A- 0 883 264
- EP-A- 0 887 971
- EP-A- 1 072 474

## Beschreibung

Die Erfindung bezieht sich auf ein Fahrzeug-Audiosystem mit einer Audio-Zentraleinheit, mit der eine oder mehrere weitere Audiokomponenten über einen zugehörigen ersten Datenbus miteinander verbunden sind, sowie mit Schnittstellenmitteln zur Datenkommunikation zwischen dem ersten Datenbus und einem zweiten fahrzeugseitigen Datenbus anderen Typs.

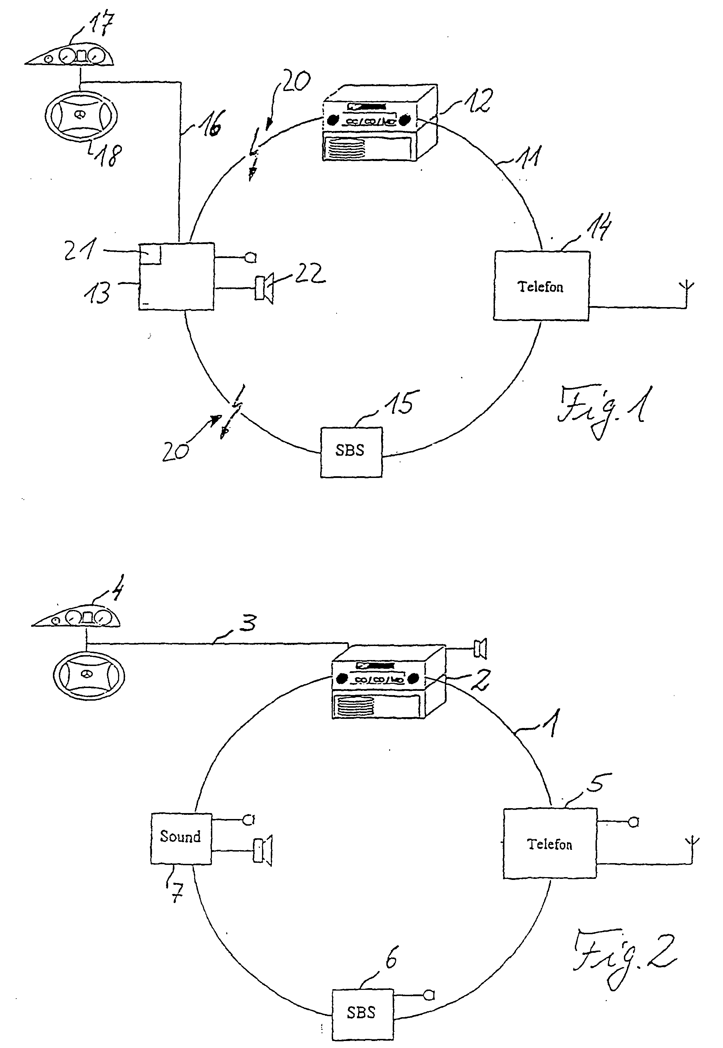

Neben anderen bekannten Auslegungen von Fahrzeug-Audiosystemen, z.B. einer in der Veröffentlichung H.Tajima et al., "A Distributed Architecture Car Audio System", Transportation Electronics: Proceedings of the International Congress on Transportation Electronics, Warrendale, PA, USA, SAE, Oktober 1986, Seite 85 beschriebenen verteilten Systemarchitektur, ist aus Fahrzeugen der Anmelderin ein Fahrzeug-Audiosystem der eingangs genannten Art bekannt, wie es schematisch in Fig. 2 dargestellt ist.

Wie aus Fig. 2 erkennbar, beinhaltet dieses Audiosystem einen optischen Ring-Datenbus 1 z.B. des unter der Abkürzung MOST geläufigen Typs, über den mehrere Audiokomponenten miteinander in Verbindung stehen. Eine davon bildet eine Audio-Zentraleinheit 2, auch Head-Unit genannt, in die zahlreiche Funktionalitäten implementiert sind, wie Benutzerschnittstellen-Steuerung, Busmasterfunktion, Prioritätenmanagement, Diagnosefunktion, Radiound Verstärkerfunktion etc. Zudem beinhaltet diese herkömmliche Zentraleinheit 2 die Schnittstellenmittel zur Datenkommunikation zwischen dem Audio-Datenbus 1 und einem zweiten fahrzeugseitigen Datenbus 3, z.B. einem unter der Abkürzung CAN-B geläufigen Datenbus, über den diverse Fahrzeugsteuergeräte miteinander vernetzt sind. Über den zweiten Datenbus 3 hat die Audio-Zentraleinheit 2 Zugriff auf ein Kombiinstrument 4, insbesondere für Anzeigezwecke, sowie auf die übrige "Fahrzeugsteuergerätewelt" z.B. zur Realisierung einer Diagnosefunktion und einer Multifunktionslenkradfunktion, bei der am Lenkrad eine oder mehrere Audiofunktionen vom Systemnutzer angesteuert werden können. Von der Audio-Zentraleinheit 2 werden die weiteren vorhandenen Audiokomponenten gesteuert, im gezeigten Beispiel eine Autotelefoneinheit 5, ein Sprachbediensystem 6 und ein Soundsystem 7, das eine komforterhöhende Aufrüstung eines Standardsystems darstellt.

Das Gesamtaufgabenfeld der herkömmlichen Audio-Zentraleinheit 2 ist folglich sehr umfangreich und komplex, wobei für verschiedene Fahrzeugtypen und Einsatzländer wenigstens ein Teil dieser Funktionalitäten fahrzeugtyp- und/oder länderspezifisch unterschiedlich ist. Hinzu kommt, dass die jeweilige Audiokomponente oftmals von verschiedenen Komponentenherstellern für unterschiedliche Fahrzeugtypen, worunter vorliegend auch unterschiedliche Baureihen verstanden werden sollen, und/oder für unter-schiedliche Länder geliefert werden, wodurch die Produktionsstückzahl jeder einzelnen Variante sinkt, auch und gerade bezüglich der herkömmlichen Audio-Zentraleinheit 2. Als weitere Auswirkung ist ein relativ hoher Testaufwand für das jeweilige Audiosystem erforderlich. Ein weiterer Problempunkt des herkömmlichen Systems ist die unterschiedliche Anbindung der Lautsprecheranlage. In einer Standardauslegung sind Lautsprecher direkt an der Zentraleinheit kontaktiert, während bei einer komforterhöhenden Auslegung mit dem Soundsystem 7 die Lautsprecher dort angeschlossen sind und in diesem Fall die Endstufen der Zentraleinheit 2 redundant sind und ungenutzt bleiben. Für zukünftige Standardsysteme sind die heutzutage verwendeten vier Endstufen voraussichtlich nicht mehr ausreichend; eine Erweiterung auf mehr Endstufen ist in der Zentraleinheit 2 aus technischen Gründen sehr schwierig oder nicht realisierbar.

Der Erfindung liegt als technisches Problem die Bereitstellung eines Fahrzeug-Audiosystems der eingangs genannten Art zugrunde, das mit vergleichsweise geringem Aufwand für unterschiedliche Fahrzeugtypen einschließlich unterschiedliche Baureihen sowie Einsatzländer verwendbar ist und das auch bei Ausfall einzelner Komponenten noch wenigstens eingeschränkt funktionsfähig ist.

Die Erfindung löst dieses Problem durch die Bereitstellung eines Fahrzeug-Audiosystems mit den Merkmalen des Anspruchs 1. Bei diesem System ist charakteristischerweise eine Audio-Gatewayeinheit als ein von der Audio-Zentraleinheit separiertes Bauteil vorgesehen, das nicht nur als Schnittstelle zur Datenkommunikation zwischen dem Audio-Datenbus und dem weiteren fahrzeugseitigen Datenbus anderen Typs fungiert, sondern in die darüber hinaus eine oder mehrere weitere Funktionalitäten implementiert sind. Bei diesen handelt es sich um eine Verstärker-Funktionalität, eine Tuner-Funktionalität sowie solche Funktionalitäten, die für verschiedene Fahrzeugtypen und/oder Einsatzländer einheitlich sind, oder um solche, die in der Audio-Gatewayeinheit fahrzeugtyp- und/oder länderspezifisch parametrisierbar und damit an den jeweiligen Fahrzeugtyp bzw. das jeweilige Einsatzland anpassbar sind. Da weiterhin wenigstens ein Fahrzeuglautsprecher an die Audio-Gatewayeinheit angeschlossen ist und diese ein Steuergerät aufweist, das die Audio-Gatewayeinheit bei Ausfall des ersten Datenbusses, der Audio-Zentraleinheit und/oder weiterer Audio-Komponenten in einem Notlaufmodus steuern kann, in dem die Verstärker- und die Tunerfunktionalität gegeben sind, kann bei einem Teilausfall des Systems wenigstens ein Notbetrieb aufrechterhalten werden.

Auf diese Weise kann die Audio-Zentraleinheit von diesen Funktionalitäten befreit ausgelegt werden, was deren Komplexität gegenüber dem oben anhand von Fig. 2 beschriebenen, herkömmlichen System deutlich reduziert. Diese Reduktion an von der Audio-Zentraleinheit zu bewältigenden Funktionalitäten hat im allgemeinen zur Folge, dass weniger unterschiedliche Varianten der Audio-Zentraleinheit für die verschiedenen Fahrzeugtypen und Einsatzländer erforderlich sind. Durch Implementierung der Lautsprecherendstufen-Funktionalität in der Audio-Gatewayeinheit zusammen mit einer Soundsystemfunktionalität lässt sich die Audio-Zentraleinheit ohne eine solche Endstufe auslegen, so dass vermieden wird, dass selbige gegebenenfalls ungenutzt bleibt. Soweit fahrzeugtyp- und/oder länderübergreifend einheitliche Funktionalitäten betroffen sind, ist eine einheitliche Auslegung der Audio-Gatewayeinheit für alle Fahrzeugtypen und Einsatzländer verwendbar. Soweit die fahrzeugtypund/oder länderspezifisch parametrisierbaren Funktionalitäten betroffen sind, kann die Audio-Gatewayeinheit durch entsprechende Parametrisierung und damit relativ einfach ohne Notwendigkeit einer großen Variantenvielfalt an den jeweils vorliegenden Fahrzeugtyp bzw. das vorliegende Einsatzland angepasst werden.

Indem im Notlaufbetrieb die Verstärker- und Tunerfunktionalität gegeben sind und wenigstens ein Lautsprecher an die Audio-Gatewayeinheit angeschlossen ist, kann ein Fahrer auch im Notlaufmodus mit wichtigen Informationen, wie Verkehrsnachrichten, versorgt werden. Auch mindert das Vorsehen eines Notlaufmodus den negativen Eindruck, den der Ausfall von Funktionalitäten beim Benutzer stets hervorruft.

Bei einem nach Anspruch 2 weitergebildeten System ist vorgesehen, dass die Audio-Gatewayeinheit Mittel zum Überprüfen der Funktionsfähigkeit des ersten Datenbusses, der Audio-Zentraleinheit und/oder weiterer Audiokomponenten aufweist.

Auf diese Weise kann ein Teilausfall des Systems detektiert und das System automatisch in den Laufmodus versetzt werden. Darüber hinaus kann die Audio-Gatewayeinheit auch im Notlaufbetrieb die Funktionsfähigkeit des Systems überprüfen und das System dann automatisch wieder in den Normalmodus versetzen oder die wiederhergestellte Funktionsbereitschaft anzeigen.

Bei einem nach Anspruch 3 weitergebildeten System ist vorgesehen, dass beim Starten des Notlaufmodus ein zuletzt empfangener Sender oder ein Sender mit ausreichender Empfangsqualität ausgewählt wird.

Diese Maßnahmen haben den Vorteil, dass ein Fahrer auch bei Teilausfall des Systems weiter mit Informationen bzw. Musik versorgt wird, ohne dass er hierzu selbsttätig Einstellungen vornehmen muss. Beim Starten des Notlaufmodus kann ein Grundzustand mit neutralem Klangbild und einer Mindestlautstärke, die noch wahrnehmbar ist, eingestellt werden. Bei der Senderauswahl liegt die Priorität auf dem zuletzt eingestellten Sender, dann wird versucht den unter der Stationstaste 1 abgespeicherten Sender einzustellen und erst nach erneutem Fehlschlagen wird der nächste Sender mit ausreichender Empfangsqualität eingestellt.

Eine vorteilhafte Ausführungsform der Erfindung sowie das zu deren besserem Verständnis oben erläuterte, herkömmliche Audiosystem sind in den Zeichnungen dargestellt, in denen zeigen:
- Fig. 1: ein schematisches Blockdiagramm eines erfindungsgemäßen Fahrzeug-Audiosystems und
- Fig. 2: ein schematisches Blockdiagramm eines herkömmlichen Fahrzeug-Audiosystems.

Das in Fig. 1 schematisch dargestellte Fahrzeug-Audiosystem beinhaltet einen Audio-Datenbus 11 in Ringstruktur, z.B. in Form eines MOST-Ringbusses, über den eine Audio-Zentraleinheit 12, eine Audio-Gatewayeinheit 13, eine Autotelefoneinheit 14 und eine Sprachbediensystemeinheit 15 miteinander verbunden sind.

Verglichen mit dem herkömmlichen System von Fig. 2 kommt die Audio-Zentraleinheit 12 des erfindungsgemäßen Systems mit deutlich geringerer Funktionskomplexität aus. Sie dient wie die herkömmliche Zentraleinheit 2 als Frontend und zur Benutzerschnittstellen(MMI)-Steuerung, ist jedoch im'übrigen weitestgehend frei von den Audio-Funktionalitäten der herkömmlichen Zentraleinheit 2. Diese weiteren Funktionalitäten sind beim erfindungsgemäßen System in der Audio-Gatewayeinheit 13 implementiert, die als eigenständiges Bauteil zusätzlich zur funktionsreduzierten Audio-Zentraleinheit 12 vorgesehen ist.

Die Audio-Gatewayeinheit 13 bildet zum einen die Gateway-Schnittstelle zwischen dem Audio-Datenbus 11 und einem weiteren fahrzeugseitigen Datenbus 16, beispielsweise einem solchen des Typs CAN-B, über den das Audiosystem mit der übrigen "Fahrzeugwelt" in Verbindung steht, insbesondere mit einem hauptsächlich für Anzeigefunktionen genutzten Kombiinstrument 17, einem Multifunktionslenkrad 18 und diagnoserelevanten Fahrzeugkomponenten sowie Warntonanforderungsmitteln. Die in der Audio-Gatewayeinheit 13 neben dieser Schnittstellenfunktion implementierten weiteren Funktionalitäten sind für verschiedene Fahrzeugtypen, einschließlich verschiedene Fahrzeugbaureihen, und/oder verschiedene Einsatzländer gleichbleibend und damit einheitlich, ohne einer fahrzeugtyp- bzw. länderspezifischen Anpassung zu bedürfen, oder sie sind fahrzeugtyp- und/oder länderspezifisch in der Audio-Gatewayeinheit 13 parametrisierbar abgelegt und können folglich mittels entsprechender Parametrisierung angepasst werden.

Auf diese Weise realisiert die Audio-Gatewayeinheit 13 eine fahrzeugtyp- und länderübergreifende Komponente des Audiosystems, in der je nach Anwendungsfall und Bedarf eine oder mehrere der folgenden Funktionalitäten enthalten sind. Erstens ist eine Verstärkerfunktion mit Lautsprecheranbindung implementiert, die sowohl für ein Standard- als auch für ein Soundsystem verwendbar ist, so dass die Audio-Zentraleinheit 12 ohne Verstärker auskommt. Zweitens fungiert die Audio-Gatewayeinheit 13 mit ihrer Schnittstellenfunktion zur Bereitstellung eines Datenaustauschs mit dem Kombiinstrument 17, dem Multifunktionslenkrad 18, für Diagnosezwecke und zum Austausch von Informationen mit audio-relevanten standardisierten Klemmen der Fahrzeugelektrik. Drittens kann in der Audio-Gatewayeinheit 13 ein zentrales Warntonmanagement integriert sein, was aufgrund der Tatsache besonders vorteilhaft ist, dass über die Audio-Gatewayeinheit 13 eine direkte Anbindung an die "Fahrzeugwelt", d.h. die übrige Fahrzeugelektrik, und ein direkter Lautsprecheranschluss realisiert werden kann. Viertens ist vorzugsweise eine Diagnosefunktion zur Durchführung von Offboard-Diagnosen vorgesehen. Fünftens kann als weitere Option eine Busmasterfunktion für das Netzwerkmanagement in der Audio-Gatewayeinheit 13 implementiert sein. Als sechste Funktionalität können Applikationen zum Hochfahren und Herunterfahren der im Audiosystem enthaltenen Telematikkomponenten vorgesehen sein. Eine siebte Funktionalität betrifft die Realisierung einer zentralen Verwaltung der Ressourcen, d.h. insbesondere der Kapazität der Datenübertragungskanäle'. Achtens ist, wie oben erwähnt, eine zentrale Lautsprecheranbindung von der Audio-Gatewayeinheit 13 aus vorgesehen. Als neunte Funktionalität ist die Möglichkeit zu erwähnen, einen Subwoofer sowohl für ein Standard- wie auch für ein Soundsystem über die Audio-Gatewayeinheit 13 flexibel anbinden zu können. Als zehnte Funktionscharakteristik kann die Anbindung nicht nur eines, sondern mehrerer Mikrofone an die Audio-Gatewayeinheit 13 vorgesehen sein, z.B. für ein Soundapplikation "Geräuschreduktion", einen Telefon-Freisprechmodus und für das Sprachbediensystem 15. Als elfte Funktionalität sei erwähnt, dass die Tunerfunktion in der Audio-Gatewayeinheit 13 implementiert ist.

Durch das Bereitstellen der von der Audio-Zentraleinheit 12 separaten Audio-Gatewayeinheit 13 mit den oben erwähnten Funktionsmöglichkeiten lassen sich insbesondere folgende Vorteile verglichen mit dem herkömmlichen System von Fig. 2 realisieren.

Die Komplexität des Audiosystems und insbesondere der Audio-Zentraleinheit wird reduziert. Hersteller bzw. Zulieferer der Einzelkomponenten des Audiosystems benötigen nicht das gesamte Wissen über das System, sondern nur über Einzelfunktionen. Die länder- und fahrzeugtypübergreifende Verwendung von Standardkomponenten des Systems reduziert den Entwicklungs- und Testaufwand sowohl beim Fahrzeug- wie auch beim Komponentenhersteller. Durch das zentrale Warntonmanagement können Warntöne ohne weitere Verzögerung schnell generiert werden, und zwar je nach Bedarf vorn, hinten, links und rechts am Fahrzeug und auch bei einem Datenbus-Ringausfall. Die Verwendung einer GAL (geschwindigkeitsabhängige Lautstärke)-Funktion ist nicht erforderlich, es kann gleich.eine höherwertige DRO-Funktion wie beim Soundsystem verwendet werden. Eine digitale Verarbeitung der Audiodaten kann bereits beim Standardsystem Verwendung finden. Durch die Verarbeitung der Mikrofonsignale an zentraler Stelle in der Audio-Gatewayeinheit lässt sich eine bessere Telefon- und Sprachbediensystem-Qualität erreichen. Im Fertigungsprozess können Testschritte, wie z.B. der Test der Lautsprecher über das Mikrofon, automatisiert werden. Die Sonderausstattung "Soundsystem" kann mittels einfachem Austausch der Audio-Gatewayeinheit durch ein solches mit entsprechend höherwertiger Ausstattung einfach nachgerüstet werden. Die Temperatur- und Verkabelungssituation im Fahrzeugtunnel-Dombereich kann ohne Probleme unkritisch gehalten werden, und es können einheitliche Steckerkonzepte zur Anwendung kommen. Eine Diebstahlschutzfunktion ist in der Audio-Zentraleinheit nicht erforderlich, da in der Minimalkonfiguration mindestens zwei Komponenten zur Ausführung der Grundfunktion notwendig sind, nämlich neben der Audio-Zentraleinheit die Audio-Gatewayeinheit. Die vorzugsweise im besagten Dombereich verbaute Audio-Zentraleinheit lässt sich wegen ihrer geringeren Komplexität einfach an die gegebenen Verhältnisse anpassen. Über die Audio-Gatewayeinheit ist zudem die heutzutage gewählte Anzahl von Verstärker-Endstufen problemlos erweiterbar.

Selbst bei Ausfall des ersten Datenbusses 11, der Audio-Zentraleinheit 12, oder der Autotelefoneinheit 14 und der Sprachbediensystemeinheit 15, wenn ein solcher Ausfall die Datenkommunikation auf dem ersten Datenbus 11 beeinträchtigt, kann das Fahrzeug-Audiosystem der Fig. 1 einen Notlaufbetrieb aufrechterhalten, in dem wichtige Audiofunktionen weiter gegeben sind. Tritt beispielsweise, wie in der Fig. 1 durch die Bezugsziffern 20 angedeutet, eine Unterbrechung des ersten Datenbusses 11 auf, kann die Audio-Zentraleinheit 12 nicht mehr wie bei störungsfreiem Betrieb die Steuerung des gesamten Audio-Fahrzeugsystems übernehmen. Dies ist speziell dann der Fall, wenn die Unterbrechung des ersten Datenbusses 11 eine Datenkommunikation hierauf vollständig unmöglich macht und folglich beide Richtungen auf dem Ring des ersten Datenbusses 11 ausgefallen sind.

Um einen Ausfall des ersten Datenbusses 11 zu erkennen, überwacht die Audio-Gatewayeinheit 13 fortlaufend die Funktionsfähigkeit des ersten Datenbusses 11, der Audio-Zentraleinheit 12 sowie der Telefoneinheit 14 und der SBS 15. Erkennt die Audio-Gatewayeinheit 13 einen Teilausfall des Audiosystems, übernimmt anstelle der Audio-Zentraleinheit 12 ein Steuergerät 21 in der Audio-Gatewayeinheit 13 die Steuerung des verbliebenen und noch funktionsfähigen Restsystems. Da in dem in der Fig. 1 dargestellten Fall der erste Datenbus 11 vollständig ausgefallen ist, besteht das noch funktionsfähige Restsystem lediglich aus der Audio-Gatewayeinheit 13 mit dem daran angeschlossenen Lautsprecher 22 sowie der Verbindung über den zweiten Datenbus 16 zum Multifunktionslenkrad 18 und dem Kombiinstrument 17. In der Audio-Gatewayeinheit 13 ist sowohl die Tunerfunktionalität als auch die Verstärker-Funktionalität implementiert. Unter Kontrolle des Steuergeräts 21 kann damit in einem Notlaufmodus ein Radiobetrieb aufrechterhalten werden, durch den ein Fahrer mit wichtigen Informationen, beispielsweise Verkehrsnachrichten versorgt werden kann. Die Steuerung der Bedienung mittels des Multifunktionslenkrads 18 sowie der Anzeige mittels des Kombiinstruments 17 wird dabei, einschließlich der Steuerung der Datenkommunikation über den zweiten Datenbus 16, von dem Steuergerät 21 übernommen.

Nach Erkennen eines Teilausfalls des Audiosystems durch die Audio-Gatewayeinheit 13 wird zunächst eine vorbestimmte Totzeit abgewartet, während der versucht wird, das Audiosystem zu starten. Ist innerhalb dieser Totzeit kein korrektes Starten des Systems möglich, steuert das Steuergerät 21 die Audio-Gatewayeinheit 13 automatisch in den Notlaufmodus. Dies kann sowohl während des laufenden Betriebs als auch nach einem fehlgeschlagenen Startvorgang des Systems erfolgen.

Wie bereits ausgeführt übernimmt das Steuergerät 21 bei einem Teilausfall des Systems die Kontrolle des Restsystems. In diesem Fall wird über das an dem zweiten Datenbus 16 angeschlossene Kombiinstrument 17 ein Hinweis an den Fahrer abgesetzt, dass das Audiosystem derzeit nur eingeschränkt funktionsfähig ist.

Im Notlaufmodus ist ein Rundfunkempfang sowie eine Audioausgabe über den Lautsprecher. 22 und eventuell weitere Lautsprecher gewährleistet, wobei, je nach Ausstattung des Fahrzeugs, die volle Klangqualität erhalten bleibt.

Beim Übergang in den Notlaufmodus versetzt das Steuergerät 21 das noch funktionsfähige Restsystem in einen definierten Grundzustand. In diesem Grundzustand ist der zuletzt empfangene Sender eingestellt, der im Rahmen der Tuner-Funktionalität noch in einem Speicher in der Audio-Gatewayeinheit 13 abgelegt ist. Sollte der zuletzt empfangene Sender nicht verfügbar sein, wird automatisch der Sender eingestellt, der ebenfalls im Rahmen der Tuner-Funktionalität unter der Stationstaste 1 abgespeichert ist. Hierzu ist diese Information nicht nur in der Audio-Zentraleinheit 12 sondern auch zusätzlich in der Audio-Gatewayeinheit 13 gespeichert. Sollte auch unter dem für die Stationstaste 1 abgespeicherten Sender kein Empfang möglich sein, wird automatisch ein Sendersuchlauf bis zur nächsten empfangbaren Station durchgeführt. Im Grundzustand ist die Lautstärke auf eine sogenannte Mindestlautstärke eingestellt, die sich aus dem Lastenheft für ein spezielles Fahrzeug ergibt. Die Klangeinstellungen werden so vorgenommen, dass sich ein neutrales Klangbild ergibt. Hierzu wird die Balance- und Fadereinstellung auf die jeweilige Mittenstellung gesetzt.

Die Steuerung im Notlaufmodus erfolgt über das Multifunktionslenkrad 18, wobei die Funktionen Lautstärkeregelung sowie Sendersuchlauf möglich sind. Als Anzeigeinstrument wird im Notlaufmodus das Display des Kombiinstruments 17 verwendet.

Auch im Notlaufmodus überprüft die Audio-Gatewayeinheit 13 in zyklischen Abständen die Funktionsfähigkeit des Audiosystems. Dies erfolgt im Hintergrund und für einen Benutzer nicht merkbar. Hierzu versucht die Audio-Gatewayeinheit 13 im Notlaufmodus das Gesamtsystem durch eine Aufwecksequenz zu starten und überprüft dadurch den Zustand des Audiosystems. Falls diese Aufwecksequenz ergibt, dass das Audiosystem sicher gestartet werden kann,kann dies am Kombiinstrument 17 angezeigt werden. Der Übergang in den Normalmodus kann dann automatisch erfolgen oder beim nächsten Einschalten des Audiosystems vorgenommen werden.

## Patentansprüche

1. Fahrzeug-Audiosystem mit
- einer Audio-Zentraleinheit (12), mit der eine oder mehrere weitere Audiokomponenten (14, 15) über einen zugehörigen ersten Datenbus (11) verbunden sind, und
- Schnittstellenmittel zur Datenkommunikation zwischen dem ersten Datenbus und einem zweiten fahrzeugseitigen Datenbus (16) anderen Typs,
**dadurch gekennzeichnet, dass**
- eine der Audiokomponenten eine die Schnittstellenmittel beinhaltende Audio-Gatewayeinheit (13) ist, die ein eigenständiges Bauteil separat von der Audio-Zentraleinheit (12) bildet und in der außer der Datenbus-Gatewayfunktionalität eine Verstärker-Funktionalität, eine Tuner-Funktionalität, eine oder mehrere weitere fahrzeugtyp- und/oder länderübergreifend einheitliche Audiofunktionalitäten und/oder eine oder mehrere weitere Audiofunktionalitäten fahrzeugtyp- und/oder länderspezifisch parametrisierbar implementiert sind, wobei wenigstens ein Fahrzeuglautsprecher (22) an die Audio-Gatewayeinheit (13) angeschlossen ist und die Audio-Gatewayeinheit (13) ein Steuergerät (21) aufweist, das so ausgelegt ist, dass es die Audio-Gatewayeinheit (13) bei Ausfall des ersten Datenbusses (11), der Audio-Zentraleinheit (12) und/oder weiterer Audiokomponenten (14, 15) in einen Notlaufmodus steuert, in dem die Verstärker-Funktionalität und die Tuner-Funktionalität gegeben sind.

2. Fahrzeug-Audiosystem nach Anspruch 1, weiter
**dadurch gekennzeichnet, dass**
die Audio-Gatewayeinheit (13) Mittel zum Überprüfen der Funktionsfähigkeit des ersten Datenbusses (11), der Audiozentraleinheit (12) und/oder weiterer Audiokomponenten (14, 15) aufweist.

3. Fahrzeug-Audiosystem nach Anspruch 1 oder 2,
**dadurch gekennzeichnet, dass** das Steuergerät (21) so ausgelegt ist, dass beim Starten des Notlaufmodus ein Grundzustand eingestellt wird, in dem ein zuletzt empfangener Sender, ein abgespeicherter Sender oder ein Sender mit ausreichender Empfangsqualität ausgewählt ist.

## Claims

1. Car audio system with
- an audio central unit (12) to which one or more other audio components (14, 15) are connected via a cooperating data bus (11), and
- interfacing means to permit data communication between the first data bus and a second vehicle-side data bus (16) of a different type,
**characterised in that**
- one of the audio components is an audio gateway unit (13) containing the interfacing means, which constitutes an independent component separate from the audio central unit (12) and in which, in addition to the data bus-gateway function, an amplifier function, a tuner function, one or more other standard audio functions universal to all vehicle types and countries and/or one or more other audio functions specific to a vehicle type or country are run on the basis of pre-settable parameters, at least one car loudspeaker (22) being connected to the audio gateway unit (13), and the audio gateway unit (13) has a control device (21) programmed so that it switches the audio gateway unit (13) to an emergency mode in which the amplifier function and tuner function are preserved if the first data bus (11), the audio central unit (12) and/or other audio components (14, 15) fail.

2. Car audio system as claimed in claim 1, further
**characterised in that**
the audio gateway unit (13) has means for checking the functional capacity of the first data bus (11), the audio central unit (12) and/or other audio components (14, 15).

3. Car audio system as claimed in claim 1 or 2,
**characterised in that**
the control device (21) is programmed so that when the emergency mode is started, a basic state is set, in which a broadcaster last received, a broadcaster stored in memory or a broadcaster with sufficient reception quality is selected.

## Revendications

1. Système audio pour véhicule comprenant
- une unité centrale audio (12), à laquelle sont reliés un ou plusieurs autres composants audio (14, 15) au moyen d'un premier bus de données (11) spécifique, et
- des moyens d'interface pour la communication de données entre le premier bus de données et un second bus de données côté véhicule (16) d'un autre type,
**caractérisé en ce que**
- l'un des composants audio est une passerelle audio (13) contenant les moyens d'interface, qui forme un composant autonome séparé de l'unité centrale audio (12) et dans laquelle, en dehors de la fonction de passerelle du bus de données, une fonction d'amplificateur, une fonction de tuner, une ou plusieurs autres fonctions audio homogènes valables pour le type de véhicule et/ou les pays et/ou une ou plusieurs autres fonctions audio peuvent être mises en oeuvre de façon paramétrable en fonction du type de véhicule et/ou des pays, au moins un haut-parleur de véhicule (22) étant raccordé à la passerelle audio (13) et la passerelle audio (13) présentant un appareil de commande (21), qui est conçu de telle sorte qu'il commande la passerelle audio (13) en cas de défaillance du premier bus de données (11) , de l'unité centrale audio (12) et/ou d'autres composants audio (14, 15) dans un mode de fonctionnement d'urgence, dans lequel la fonction, d'amplificateur et la fonction de tuner sont utilisées.

2. Système audio pour véhicule selon la revendication 1, caractérisé également en ce que la passerelle audio (13) présente des moyens pour vérifier le bon fonctionnement du premier bus de données (11), de l'unité centrale audio (12) et/ou d'autres composants audio (14, 15).

3. Système audio pour véhicule selon la revendication 1 ou 2, **caractérisé en ce que** l' appareil de commande (21) est conçu de telle sorte que, lors du démarrage du mode de fonctionnement d'urgence, on règle un état de base dans lequel on choisit un émetteur reçu en dernier, un émetteur mémorisé ou un émetteur avec une qualité de réception suffisante.
